# EUROPEAN PATENT APPLICATION

(11) **EP 1 022 721 A2**
(43) Date of publication of application: **26.07.2000**
(21) Application number: 99309753.4
(22) Date of filing: 03.12.1999
(51) Int. Cl.: G10K 11/16

(54) **Sound absorbing structures**

(30) Priority: 19.01.1999 GB 9901167
(71) Applicant: DRAFTEX INDUSTRIES LIMITED, Edinburgh EH2 3AP, Scotland (GB)
(72) Inventor: Cohen, Olivier, 44100 Nantes (FR)
(74) Representative: Foster, David Martyn

(57) **Abstract**

A sound-absorbing structure (5) comprising a thin flexible film (12) supported on a support (6) in the form of an array of walls (8) forming a grid of cells (10) closed off by the film (12). The film (12) may be secured continuously to the upper surface of all the walls or may be only intermittently secured to the walls, but in each case to define a plurality of elemental parts of the surface of the film (12) which are independently vibratable at respective resonant frequencies in response to incident sound waves to cause loss of energy thereof. The support (6) is made of thin flexible material, such as foamed thermoplastic or rubber material, and preferably it is made from recycled low density, low cost materials. Because sound absorption occurs by a surface-resonance phenomenon, the structure 6 can be only a few millimeters thick. The underside of the structure (6) can be mounted on a sheet-like support member, advantageously flexible, this member in turn being mounted on the wall of a space in which occurs the sound to be absorbed, such as, for example, the engine compartment of a motor vehicle. Instead, the underside of the support (6) can be directly mounted on a wall of the engine compartment.

## Description

The invention relates to a sound absorbing structure, comprising a support defining an area, and a flexible film extending over the area and attached to the support at predetermined positions thereover to define a plurality of elemental parts of the surface of the film, the film being vibratable in response to incident sound waves to cause loss of energy thereof, the support comprising an array of walls forming a grid of side-by-side open-topped cells, with the tops of the cells lying in the area and being closed off by the film.

Such a structure is shown in GB-A 2 264 895. In this structure, the support is made of rigid material. This restricts the application of the structure. In addition, a second support, also of rigid material and of grid-like form, is placed over the film on the first support and has cells with smaller openings so that the vibration of the film is restricted.

In accordance with the invention, therefore, the structure as first set forth above is characterised in that the support is made of flexible material and each elemental part of the surface of the film is independently vibratable over its full extent.

Sound absorbing structures embodying the invention will now be described, by way of example only, with reference to the accompanying diagrammatic drawings in which:
Figure 1 is a perspective view, partly broken away, of one of the structures;
Figure 2 is a view corresponding to Figure 1 but showing the structure mounted on a support;
Figure 3 shows how the structures may be mounted in the engine compartment of a motor vehicle; and
Figures 4,5 and 6 show modifications of the structure of Figure 1.

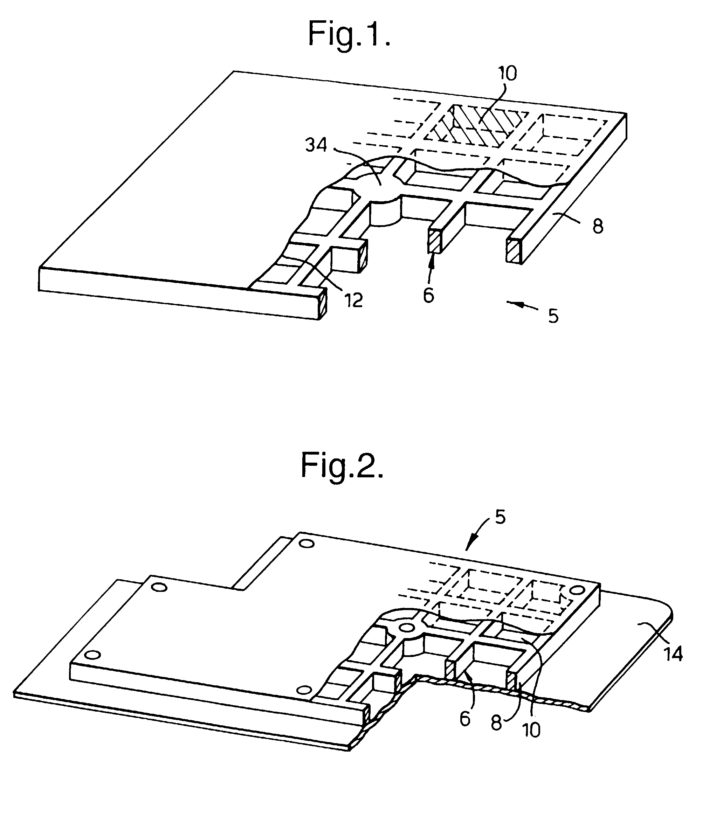

Referring to Figure 1, the sound absorbing structure 5 comprises a grid-form support 6 made of flexible material such as, for example, a polyolefin foam, melamine (possibly treated with material to improve its sealing properties), polyurethane (with closed cells or covered with the skin to improve sealing), rubber, or compacted waste material (fibres, foams of various different types), advantageously of low density. The support 6 is, in this example, arranged to produce a rectangularly arranged array of walls 8 forming cells 10 of rectangular form with open tops and bottoms. The support 6 can be produced by cutting (from flat strips or from rolls of the material), by moulding or any other suitable method.

In accordance with a feature of the invention, the support 6 is covered with a flexible film 12. The film can be made of polyolefine, polyurethane, polyester or other suitable material. It may be produced by extrusion. It is attached to the support 6 by any suitable way, such as by means of adhesive or thermo-fusion. The film 12 can also be attached to the support 6 by directly moulding it onto the support 6, by ensuring physico-chemical compatability of the material of the film 12 and the material of the support 6. The film 12 may be attached to the support 6 over the entire upper surface of its walls 8. Instead, however, it can be attached to the support 6 only at spaced-apart positions - such as at the intersections of the walls 8 for example.

In use, the structure 5 shown in Figure 1 is mounted on a surface to receive sound waves to be absorbed. In a particular example, the surface is part of the wall of the engine compartment of a motor vehicle. The structure 5 may be mounted in such position by first mounting it on a support sheet 14 (Figure 2). The support sheet 14 may be made of any suitable material, such as a thermoplastic material. Preferably, it is flexible though relatively stiff.

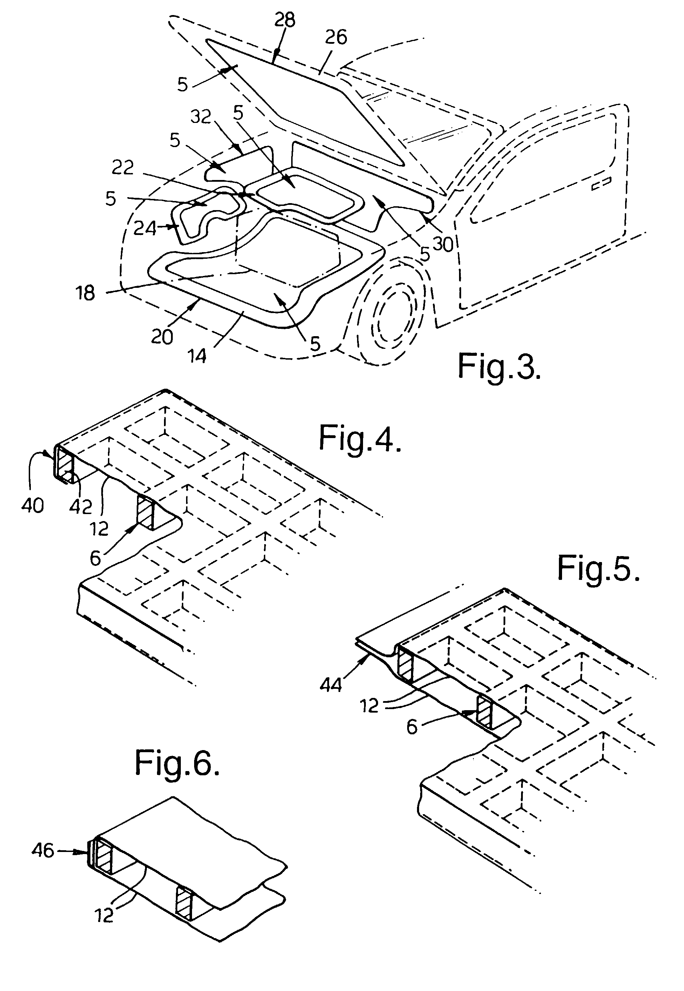

As shown in Figure 3, structures 5 of the type shown in Figure 1, mounted on sheets 14 as shown in Figure 2, may be positioned in or around the engine compartment 16 of a motor vehicle as shown in Figure 3, where the engine is indicated in dotted form at 18. As shown in Figure 3, a sound absorbing structure 5 mounted on a sheet 14 may be mounted under the engine as shown at 20, above the engine as shown at 22 and laterally of the engine as shown at 24.

However, the structures 5 can instead be mounted directly on suitable surfaces - that is, without the use of a support sheet 14. Thus, as shown in Figure 3, a structure 5 may be mounted directly on the underside of the bonnet 26 of the engine compartment as shown at 28, directly on the bulkhead as shown at 30 and directly on one or more lateral sides of the engine compartment as shown at 32.

The structure 5 can be mounted on the support sheet 14, or directly on a surface of the engine compartment, by means of adhesive, local melting (thermo-fusion), clips or other fixtures, such as positioned at specific fixing points 34 (Figure 1). The support sheet 14 can itself be attached to the engine compartment in similar ways.

In use, the sound absorbing structure 5 absorbs sound by using the phenomenon of surface resonance. Thus, the film 12 vibrates on the grid-shaped support 6 between the points or areas where it is secured to the walls 8, the sound energy being absorbed by these vibrations of the film. The sound absorbing characteristics of the structure will depend on the resonant frequency or resonant frequencies of the film. This frequency or frequencies will depend on the characteristics of the film and on the size of the individually vibratable elemental areas of the film 12. This will in turn depend on the areas of the cells 10 and the manner in which the film is secured to the walls 8. The structure 6 may be constructed so that the cells 10 all have the same areas or have different areas. In the latter case, the structure 5 is able to absorb sound at a variety of different frequencies.

Because the structure 5 operates using the phenomenon of surface resonance, its thickness (that is, the height of the walls 8) is not of significance. The structure 5 can therefore have a very small thickness (a few millimetres).

Because the structure 5 is flexible, it can be easily shaped to suit the profile of the surface on which it is to be mounted (whether directly or by means of a support sheet 14). Because the support 6 is substantially only providing a supporting rôle, it can be made from low density and low cost materials, such as recycled compacted waste.

In a case where sealing or water-tightness is not required, the support 6 may be formed using porous materials, so as further to reduce its weight and cost. The film 12 could also in this case be fibrous (for example, non-woven polyester).

Figures 4,5 and 6 show modifications.

In Figure 4, the film 12 is extended at 40 around the edge 42 of the support 6 and partly onto the underface of the support. In this way, the film can be more firmly secured.

Figures 5 and 6 show how the support 6 can be completely enclosed within the film 12 which covers the upper and lower faces of the support and its edges. In Figure 5, the film is folded over the support to enclose it, the edges of the film being laid flat on each other and welded or adhered together as shown at 44. In Figure 6, the edges of the film are overlaid on each other and on the edge of the support 6 as shown at 46 and then welded or adhered together.

## Claims

1. A sound absorbing structure, comprising a support (6) defining an area, and a flexible film (12) extending over the area and attached to the support (6) at predetermined positions thereover to define a plurality of elemental parts of the surface of the film (12), the film (12) being vibratable in response to incident sound waves to cause loss of energy thereof, the support comprising an array of walls (8) forming a grid of side-by-side open-topped cells (10), with the tops of the cells lying in the area and being closed off by the film (12) characterised in that the support (6) is made of flexible material and each elemental part of the surface of the film (12) is independently vibratable over its full extent.

2. A structure according to claim 1, characterised in that the cells (10) are rectangular.

3. A structure according to claim 1 or 2, characterised in that the cells (10) are of different cross-sectional area.

4. A structure according to any preceding claim, characterised in that the film (12) extends over a peripheral edge (42) of the support (6).

5. A structure according to any preceding claim, characterised in that the film (12) extends over a surface of the support (6) which is opposite to the said area.

6. A structure according to claim 5, characterised in that the film (12) is secured to itself to enclose the support (6).

7. A structure according to any preceding claim, characterised in that the support (6) is made of foamed material.

8. A structure according to any preceding claim, characterised in that the support (6) is made of thermoplastic material.

9. A structure according to any one of claims 1 to 7, characterised in that the support (6) is made of rubber.

10. A structure according to any preceding claim, characterised in that the support (6) is made of recycled waste material.

11. A structure according to claim 10, characterised in that the waste material is compacted low density material.

12. A structure according to any preceding claim, characterised in that a surface of the support (6) opposite to the said area is mounted on a support member (14;26,28,30,32).

13. A structure according to claim 12, characterised in that the support member is a flexible sheet-like member (14).

14. A structure according to claim 13, characterised in that the support member (14;26,28,30,32) is positioned in or partly defines a space in which the sound waves occur so that the film (12) is presented to the space.

15. A motor vehicle characterised by a structure which is in accordance with any preceding claim and which is positioned to receive sound waves produced by operation of the vehicle.

16. A vehicle according to claim 15, characterised in that the structure is positioned in the engine compartment of the vehicle.
